# FASCICULE DE BREVET EUROPEEN

(11) **EP 2 354 597 B1**
(45) Date de publication et mention de la délivrance du brevet: **04.07.2012**
(21) Numéro de dépôt: 10001009.9
(22) Date de dépôt: 02.02.2010
(51) Int. Cl.: F16H 55/16, F16H 55/18, G04B 13/02, G04B 35/00

(54) **Mobile à rattrapage de jeu**
Triebfeder mit Spielnachstellung
Mobile with clearance compensation

(43) Date de publication de la demande: 10.08.2011
(73) Titulaire: Patek Philippe SA Genève, 1204 Genève (CH)
(72) Inventeur: Geiser, Sylvain, 1288 Aire-la-ville (CH)
(74) Mandataire: Micheli & Cie SA

(56) Documents cités:
- EP-A1- 2 003 522
- EP-A1- 2 112 567
- JP-A- 56 010 860
- JP-A- 2008 189 172

## Description

La présente invention se rapporte au domaine des engrenages, notamment d'horlogerie. La présente invention concerne plus particulièrement un mobile à rattrapage de jeu pour un engrenage.

Dans les engrenages traditionnels, les mobiles dentés en prise l'un avec l'autre ont nécessairement un jeu ou ébat entre eux, ceci pour tenir compte des tolérances de fabrication. Le jeu est défini comme la différence entre le pas et la somme des largeurs de deux dents respectives des mobiles. Dans le domaine horloger, les jeux d'engrenage nuisent à la précision d'affichage en ce qu'ils peuvent notamment entraîner des chevrotements des aiguilles indicatrices.

Des mobiles d'engrenage à rattrapage de jeu ont déjà été proposés. Dans le brevet EP 1520123 est décrit un engrenage dans lequel les dents de l'une des roues sont divisées en deux demi-dents par une fente radiale, l'une de ces demi-dents étant entière et possédant une rigidité suffisante pour assurer correctement la transmission des forces auxquelles elle est soumise, l'autre demi-dent comportant un évidement lui permettant de se déformer élastiquement en cas de serrage. Cet engrenage est conçu pour fonctionner dans un sens de rotation déterminé. Un fonctionnement de l'engrenage dans l'autre sens semble possible, mais il s'effectuerait avec un rendement médiocre car les forces seraient transmises par les demi-dents élastiques. Cet engrenage est de plus très sensible aux défauts de fabrication, en particulier aux variations d'entraxe. La plage de travail des demi-dents élastiques est en effet relativement limitée, si bien qu'un entraxe un peu plus petit que l'entraxe théorique entre les deux roues risque de provoquer du bourrage alors qu'un entraxe un peu plus grand que l'entraxe théorique risque de faire que la demi-dent élastique ne soit pas sollicitée et que les jeux ne soient pas rattrapés.

La demande de brevet japonais JP 63-130961 décrit une roue d'engrenage dont les dents sont fendues soit symétriquement, dans le cas d'un engrenage bidirectionnel, soit asymétriquement, dans le cas d'un engrenage unidirectionnel, pour permettre une déformation élastique des dents pour absorber les erreurs de pas, de profil de dent ou autres. Dans le cas de l'engrenage unidirectionnel, cette roue d'engrenage présente les mêmes inconvénients que ceux mentionnés ci-dessus en rapport avec le document EP 1520123. Dans le cas de l'engrenage bidirectionnel, le rendement est médiocre dans les deux sens puisque la transmission des forces s'effectue dans les deux sens par des demi-dents qui se déforment élastiquement.

La demande de brevet EP 2003522 propose un mobile denté à rattrapage de jeu pour un engrenage, mobile dont une dent sur deux est fixe et entièrement rigide, l'autre dent étant constituée par une lame ressort comportant un flanc d'engrènement. Ce mobile transmet ainsi le couple à l'autre mobile alternativement par une dent rigide et par une dent élastique. Il en résulte des variations de couple et donc de vitesse de rotation qui se répercutent sur les aiguilles indicatrices et nuisent par conséquent à la précision d'affichage. En outre, pour pouvoir transmettre le couple à l'autre mobile, les dents élastiques ne peuvent pas avoir une trop grande élasticité. Leur relative rigidité fait que lors du contact entre une dent élastique et une dent de l'autre mobile la dent élastique serre avec une force relativement élevée la dent de l'autre mobile contre une dent rigide du mobile à rattrapage de jeu, ce qui produit des frottements et diminue le rendement de l'engrenage. Enfin, la forme des dents élastiques ne semble pas permettre cinématiquement un fonctionnement bidirectionnel de l'engrenage.

La demande de brevet EP 2 112 567 divulgue toutes les caractéristiques du préambule de la revendication 1.

La présente invention vise à proposer un mobile à rattrapage de jeu pour un engrenage qui permette audit engrenage de fonctionner dans les deux sens et d'avoir un bon rendement dans les deux sens également.

A cette fin, il est prévu un mobile à rattrapage de jeu destiné à former un engrenage avec un deuxième mobile et comprenant des dents rigides et des lames ressort à rattrapage de jeu, caractérisé en ce que les dents rigides sont réparties en groupes de dents consécutives, chaque groupe comprenant une première dent rigide et une deuxième dent rigide comprenant des flancs d'engrènement respectifs se faisant face pour permettre le déplacement du deuxième mobile dans les deux sens, et en ce que les lames ressort sont intercalées entre ces groupes, dans des espaces non destinés à recevoir les dents du deuxième mobile, et s'étendent au-delà du cercle de tête des dents rigides pour coopérer avec le deuxième mobile.

De préférence, l'extrémité libre des lames ressort, destinée à coopérer avec le deuxième mobile, a une forme recourbée.

Selon des modes de réalisation, les dents de chaque groupe font saillie depuis l'extrémité supérieure d'un pied commun qui les relie à une serge du mobile à rattrapage de jeu. La hauteur des pieds est de préférence au moins égale à une demi fois la hauteur des dents rigides, de préférence encore au moins égale à une fois la hauteur des dents rigides, de préférence encore au moins égale à deux fois la hauteur des dents rigides, de préférence encore au moins égale à trois fois la hauteur des dents rigides et de préférence encore au moins égale à quatre fois la hauteur des dents rigides.

La présente invention porte aussi sur un engrenage comprenant un mobile à rattrapage de jeu tel que défini ci-dessus et un deuxième mobile coopérant avec le mobile à rattrapage de jeu.

La présente invention porte aussi sur une pièce d'horlogerie comprenant un tel engrenage.

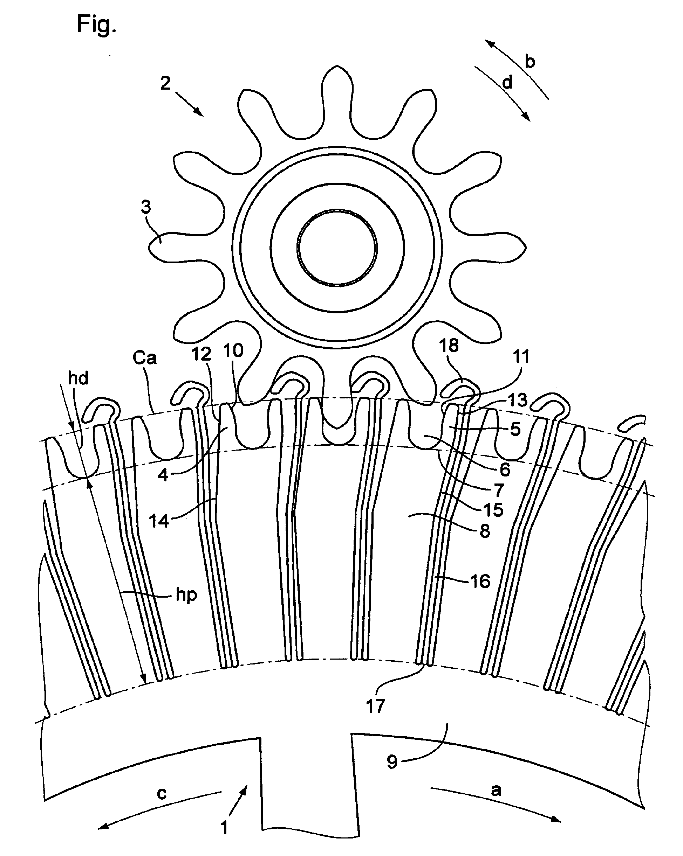

D'autres caractéristiques et avantages de la présente invention apparaîtront à la lecture de la description détaillée suivante faite en référence à la figure annexée qui représente en vue plane partielle un engrenage selon un mode de réalisation préféré de l'invention.

Cet engrenage comprend une roue dentée menante 1 en prise avec un pignon denté mené 2. La denture du pignon 2 est traditionnelle et comporte ainsi des dents rigides 3 régulièrement réparties sur la périphérie du pignon 2. La denture de la roue 1 est composée de groupes de dents rigides régulièrement répartis sur la périphérie de la roue 1. Chaque groupe comprend une première dent 4 et une deuxième dent 5 qui sont consécutives, séparées uniquement par un espace vide 6, et qui font saillie depuis l'extrémité supérieure 7 d'un pied commun 8 qui les relie à la serge 9 de la roue 1. Les dents 4, 5 ont une hauteur hd correspondant à la hauteur utile d'une dent standard. Le pied 8 a une hauteur hp plus grande que la hauteur hd des dents 4, 5 et une largeur, au niveau de son extrémité supérieure 7, sensiblement égale à la somme des largeurs des dents 4, 5 et de la largeur de l'espace 6 entre les dents 4, 5. L'ensemble constitué par le pied 8 et les dents 4, 5 possède ainsi une grande rigidité, tout en ayant une grande hauteur. Les dents 4, 5 ont des flancs d'engrènement respectifs convexes 10, 11 qui se font face. Les autres flancs 12, 13 des dents 4, 5 sont sensiblement droits et constituent des prolongements des flancs 14, 15 du pied 8.

L'engrenage formé par la roue 1 et le pignon 2 est ainsi bidirectionnel. Dans un sens de rotation de la roue 1, indiqué sur le dessin par la flèche a, les premières dents 4 coopèrent par leurs flancs d'engrènement 10 avec les dents 3 du pignon 2 pour communiquer une force au pignon 2 le faisant tourner dans le sens b. Dans l'autre sens de rotation de la roue 1, indiqué sur le dessin par la flèche c, les deuxièmes dents 5 coopèrent par leurs flancs d'engrènement 11 avec les dents 3 du pignon 2 pour communiquer une force au pignon 2 le faisant tourner dans le sens d. Ainsi, la transmission des forces entre la roue 1 et le pignon 2 s'effectue toujours par l'intermédiaire de dents rigides, quel que soit le sens de rotation de l'engrenage. Les autres flancs 12, 13 des dents 4, 5 n'ont pas de rôle fonctionnel.

Dans chaque espace entre deux ensembles 4, 5, 8 consécutifs est prévue une lame ressort 16 jointe par une première extrémité 17 à la serge 9 de la roue 1 et dont l'autre extrémité 18, libre, se situe au-delà du cercle de tête Ca des dents 4, 5, c'est-à-dire le cercle passant par les sommets respectifs desdites dents. Les extrémités libres 18 des lames ressort 16 sont recourbées à la manière d'un crochet pour passer au-dessus des deuxièmes dents 5 respectivement. Ainsi, les lames ressort 16 peuvent coopérer avec les dents 3 du pignon 2 simultanément à la coopération entre ces mêmes dents 3 et les dents 4 ou 5 de la roue 1.

La fonction des lames ressort 16 est de rattraper les jeux de l'engrenage. Lorsque la roue 1 tourne dans le sens a, une ou plusieurs lames ressort 16 agissent sur le pignon 2 pour maintenir une dent 3 du pignon 2 en contact avec le flanc d'engrènement 10 d'une dent 4 de la roue 1, comme montré sur la figure. Lorsque la roue 1 tourne dans le sens c, les lames ressort 16 ne peuvent vaincre la résistance qu'oppose le pignon 2 et ce dernier est poussé par les flancs d'engrènement 11 des dents 5. Au moment où la roue 1 s'arrête de tourner, si la résistance qu'oppose le pignon 2 disparaît, une ou plusieurs lames ressort 16 poussent ce dernier jusqu'à ce qu'une de ses dents 3 bute contre le flanc d'engrènement 10 d'une dent 4. Ainsi, la position d'arrêt du pignon 2 est stable.

Comme visible sur le dessin, la grande hauteur des pieds 8 permet aux lames ressort 16 d'avoir elles aussi une grande hauteur ce qui leur confère une grande déformabilité et donc une grande plage de travail. L'engrenage est ainsi très peu sensible aux défauts de fabrication, en particulier aux mal-ronds de la roue 1 et du pignon 2 et aux variations d'entraxe, c'est-à-dire de la distance entre les axes respectifs de la roue 1 et du pignon 2. En pratique, la hauteur hp des pieds 8 est supérieure ou égale à une demi fois la hauteur hd des dents 4, 5. Dans certains modes de réalisation, la hauteur hp est supérieure ou égale à une fois la hauteur hd. Dans d'autres modes de réalisation, la hauteur hp est supérieure ou égale à deux fois la hauteur hd. Dans d'autres modes de réalisation encore, la hauteur hp est supérieure ou égale à trois fois la hauteur hd. Enfin, dans d'autres modes de réalisation encore, la hauteur hp est supérieure ou égale à quatre fois la hauteur hd.

Au lieu d'avoir la roue 1 menante et le pignon 2 mené, le pignon 2 pourrait être menant dans l'un ou l'autre des sens b et d et la roue 1 pourrait être menée dans l'un ou l'autre des sens correspondants a et c.

La roue 1 peut être en métal ou en silicium et le pignon 2 en métal, par exemple.

L'engrenage selon l'invention peut être utilisé par exemple dans une pièce d'horlogerie telle qu'une montre-bracelet.

L'invention peut s'appliquer à des engrenages à dentures extérieures, comme représenté, mais aussi à des engrenages à denture intérieure tels que des engrenages formés par une couronne à denture intérieure et un pignon satellite.

## Revendications

1. Mobile à rattrapage de jeu (1) destiné à former un engrenage avec un deuxième mobile (2) et comprenant des dents rigides (4, 5) et des lames ressort à rattrapage de jeu (16), **caractérisé en ce que** les dents rigides (4, 5) sont réparties en groupes de dents consécutives, chaque groupe comprenant une première dent rigide (4) et une deuxième dent rigide (5) comprenant des flancs d'engrènement respectifs (10, 11) se faisant face pour permettre le déplacement du deuxième mobile (2) dans les deux sens, et **en ce que** les lames ressort (16) sont intercalées entre ces groupes, dans des espaces non destinés à recevoir les dents (3) du deuxième mobile (2), et s'étendent au-delà du cercle de tête (Ca) des dents rigides (4, 5) pour coopérer avec le deuxième mobile (2).

2. Mobile à rattrapage de jeu selon la revendication 1, **caractérisé en ce que** l'extrémité libre (18) des lames ressort (16), destinée à coopérer avec le deuxième mobile (2), a une forme recourbée.

3. Mobile à rattrapage de jeu selon la revendication 1 ou 2, **caractérisé en ce que** les dents (4, 5) de chaque groupe font saillie depuis l'extrémité supérieure (7) d'un pied commun (8) qui les relie à une serge (9) du mobile à rattrapage de jeu (1).

4. Mobile à rattrapage de jeu selon la revendication 3, **caractérisé en ce que** la hauteur (hp) des pieds (8) est au moins égale à une demi fois la hauteur (hd) des dents rigides (4, 5).

5. Mobile à rattrapage de jeu selon la revendication 3, **caractérisé en ce que** la hauteur (hp) des pieds (8) est au moins égale à une fois la hauteur (hd) des dents rigides (4, 5).

6. Mobile à rattrapage de jeu selon la revendication 3, **caractérisé en ce que** la hauteur (hp) des pieds (8) est au moins égale à deux fois la hauteur (hd) des dents rigides (4, 5).

7. Mobile à rattrapage de jeu selon la revendication 3, **caractérisé en ce que** la hauteur (hp) des pieds (8) est au moins égale à trois fois la hauteur (hd) des dents rigides (4, 5).

8. Mobile à rattrapage de jeu selon la revendication 3, **caractérisé en ce que** la hauteur (hp) des pieds (8) est au moins égale à quatre fois la hauteur (hd) des dents rigides (4, 5).

9. Engrenage comprenant un mobile à rattrapage de jeu (1) selon l'une quelconque des revendications 1 à 8 et un deuxième mobile (2) coopérant avec le mobile à rattrapage de jeu (1).

10. Pièce d'horlogerie comprenant un engrenage selon la revendication 9.

## Claims

1. Backlash-compensating mobile (1) intended to form a gear with a second mobile (2) and having rigid teeth (4, 5) and backlash-compensating leaf springs (16), **characterised in that** the rigid teeth (4, 5) are distributed in groups of consecutive teeth, each group having a first rigid tooth (4) and a second rigid tooth (5) having respective mutually facing meshing flanks (10, 11) to permit the displacement of the second mobile (2) in both directions, and **in that** the leaf springs (16) are interleaved between these groups in spaces not intended to receive the teeth (3) of the second mobile (2), and extend beyond the tip circle (Ca) of the rigid teeth (4, 5) in order to cooperate with the second mobile (2).

2. Backlash-compensating mobile as claimed in claim 1, **characterised in that** the free end (18) of the leaf springs (16), intended to cooperate with the second mobile (2), is curved in shape.

3. Backlash-compensating mobile as claimed in claim 1 or 2, **characterised in that** the teeth (4, 5) of each group protrude from the upper end (7) of a common foot (8) which connects them to a rim (9) of the backlash-compensating mobile (1).

4. Backlash-compensating mobile as claimed in claim 3, **characterised in that** the height (hp) of the feet (8) is at least equal to half the height (hd) of the rigid teeth (4, 5).

5. Backlash-compensating mobile as claimed in claim 3, **characterised in that** the height (hp) of the feet (8) is at least equal to the height (hd) of the rigid teeth (4, 5).

6. Backlash-compensating mobile as claimed in claim 3, **characterised in that** the height (hp) of the feet (8) is at least equal to twice the height (hd) of the rigid teeth (4, 5).

7. Backlash-compensating mobile as claimed in claim 3, **characterised in that** the height (hp) of the feet (8) is at least equal to three times the height (hd) of the rigid teeth (4, 5).

8. Backlash-compensating mobile as claimed in claim 3, **characterised in that** the height (hp) of the feet (8) is at least equal to four times the height (hd) of the rigid teeth (4, 5).

9. Gear comprising a backlash-compensating mobile (1) as claimed in any one of claims 1 to 8, and a second mobile (2) cooperating with the backlash-compensating mobile (1).

10. Timepiece comprising a gear as claimed in claim 9.

## Patentansprüche

1. Drehteil (1) mit Spielnachstellung, der dazu bestimmt ist, mit einem zweiten Drehteil (2) ein Getriebe zu bilden, und starre Zähne (4, 5) und Federblätter (16) mit Spielnachstellung umfasst, **dadurch gekennzeichnet, dass** die starren Zähne (4, 5) in Gruppen von aufeinanderfolgenden Zähnen aufgeteilt sind, wobei jede Gruppe einen ersten starren Zahn (4) und einen zweiten starren Zahn (5) umfasst, die jeweilige Eingriffsflanken (10, 11) umfassen, die einander gegenüberliegen, um die Bewegung des zweiten Drehteils (2) in die zwei Richtungen zu ermöglichen, **dadurch**, dass die Federblätter (16) zwischen diesen Gruppen in Räumen zwischengeschaltet sind, die nicht zum Aufnehmen der Zähne (3) des zweiten Drehteils (2) bestimmt sind, und sich über den Kopfkreis (Ca) der starren Zähne (4, 5) hinaus erstrecken, um mit dem zweiten Drehteil (2) zusammenzuwirken.

2. Drehteil mit Spielnachstellung nach Anspruch 1, **dadurch gekennzeichnet, dass** das freie Ende (18) der Federblätter (16), das zum Zusammenwirken mit dem zweiten Drehteil (2) bestimmt ist, eine umgebogene Form aufweist.

3. Drehteil mit Spielnachstellung nach Anspruch 1 oder 2, **dadurch gekennzeichnet, dass** die Zähne (4, 5) jeder Gruppe vom oberen Ende (7) eines gemeinsamen Fußes (8) hervorstehen, der sie mit einem Reif (9) des Drehteils (1) mit Spielnachstellung verbindet.

4. Drehteil mit Spielnachstellung nach Anspruch 3, **dadurch gekennzeichnet, dass** die Höhe (hp) der Füße (8) mindestens gleich der Hälfte der Höhe (hd) der starren Zähne (4, 5) ist.

5. Drehteil mit Spielnachstellung nach Anspruch 3, **dadurch gekennzeichnet, dass** die Höhe (hp) der Füße (8) mindestens gleich dem Einfachen der Höhe (hd) der starren Zähne (4, 5) ist.

6. Drehteil mit Spielnachstellung nach Anspruch 3, **dadurch gekennzeichnet, dass** die Höhe (hp) der Füße (8) mindestens gleich dem Zweifachen der Höhe (hd) der starren Zähne (4, 5) ist.

7. Drehteil mit Spielnachstellung nach Anspruch 3, **dadurch gekennzeichnet, dass** die Höhe (hp) der Füße (8) mindestens gleich dem Dreifachen der Höhe (hd) der starren Zähne (4, 5) ist.

8. Drehteil mit Spielnachstellung nach Anspruch 3, **dadurch gekennzeichnet, dass** die Höhe (hp) der Füße (8) mindestens gleich dem Vierfahren der Höhe (hd) der starren Zähne (4, 5) ist.

9. Getriebe, das einen Drehteil (1) mit Spielnachstellung nach einem der Ansprüche 1 bis 8 und einen zweiten Drehteil (2) umfasst, das mit dem Drehteil (1) mit Spielnachstellung zusammenwirkt.

10. Uhr, die ein Getriebe nach Anspruch 9 umfasst.
